# EUROPEAN PATENT APPLICATION

(11) **EP 0 725 269 A2**
(43) Date of publication of application: **07.08.1996**
(21) Application number: 96101055.0
(22) Date of filing: 25.01.1996
(51) Int. Cl.: G01N 21/55

(54) **Optical sensor and method therefor**

(30) Priority: 03.02.1995 US 383146
(71) Applicant: MOTOROLA, INC., Schaumburg, IL 60196 (US)
(72) Inventor: Ackley, Donald Elton, Lambertville, New Jersey (US)
(74) Representative: Hudson, Peter David

(57) **Abstract**

An optical sensor (10,20) is used to detect the presence of analytes in an environment. The sensor (10,20) couples light from a polymer light emitting diode (12,26) to a polymer photodetector (13,27,37) via an optical waveguide element (15) that reacts with the analyte and alters light that is emitted by the polymer light emitting diode (12,26).

## Description

### Background of the Invention

The present invention relates, in general, to sensors, and more particularly, to a novel optical sensor.

Evanescent wave or evanescent mode sensors have been used for a variety of applications including detecting the presence of chemicals such as carbon monoxide, hydrocarbons, nitrous oxide, sulfides, and organics, in both air and ground water. Such sensors are also used for medical applications such as determining blood oxygen content. These prior evanescent mode sensors typically utilize a discrete laser or LED as an optical source or emitter and a discrete optical detector. The emitter and detector are both optically coupled to a waveguide with prisms or etched gratings.

One problem with the prior sensors is cost. Prisms and etched gratings are very expensive. The discrete laser and optical detectors are also expensive. Additionally, it is difficult to match the emitters and detectors to the waveguide consequently the prior sensors have high loss which results in poor detection characteristics.

Accordingly, it is desirable to have an evanescent mode sensor that has a low cost, and that has high efficiency.

### Brief Description of the Drawings

FIG. 1 illustrates a cross-sectional portion of an optical sensor in accordance with the present invention; and
FIG. 2 illustrates a plan view of a multi-channel optical sensor in accordance with the present invention.

### Detailed Description of the Drawings

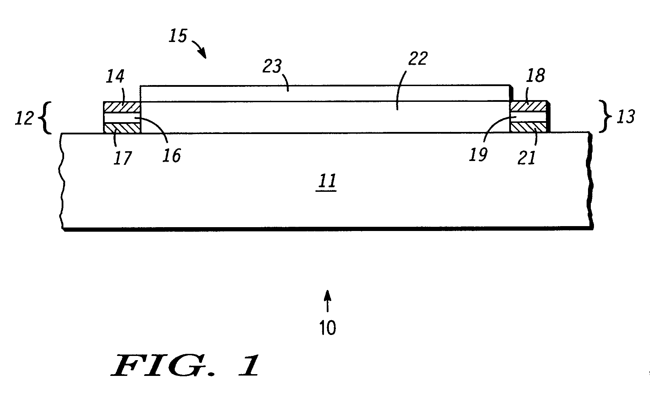

FIG. 1 illustrates an enlarged cross-sectional portion of an optical sensor 10. Sensor 10 includes an optical emitter and an optical photodetector or optical detector that are formed on a substrate 11 and that are optically coupled together by an optical waveguide element 15. The optical emitter injects light into element 15, and the light is detected by the optical detector. As will be seen hereinafter, optical waveguide element 15 reacts to certain analytes in the atmosphere and alters the characteristics of the light that is detected by the detector. As used herein, the term "analyte" means a chemical or chemical condition that is to be detected. Examples of analytes include particular pH levels, oxygen, carbon monoxide, carbon dioxide, hydrocarbons, nitrous oxide, sulfides, organics and other chemicals or substances.

In the preferred embodiment, the optical emitter is a first polymer light-emitting diode 12 that is formed on substrate 11, and the optical detector is a polymer photodetector or detector 13 that is formed on substrate 11. Detector 13 can be a second polymer light-emitting diode that is operated in a reverse biased mode in order to function as a photodetector. Polymer light emitting diodes and photodetectors are well known in the art. An example of a polymer light-emitting diode and photodetector can be found in a paper by G. Yu et al, "Dual-Functioning Semiconducting Polymer Devices: Light Emitting and Photo-detecting Diodes", Applied Physics Letters, Vol. 64, pp. 1540-1542, 1994.

Diode 12 is formed by applying a contact layer 17 to substrate 11, applying a polymer 16 on layer 17, and then forming a conductor 14 on polymer 16. Substrate 11 is formed from a material, such as glass, or polycarbonate, that is compatible with the materials used for diode 12, detector 13, and optical waveguide element 15. Contact layer 17 and conductor 14 typically are opaque materials, such as a metal layer of magnesium and silver or a metal layer of aluminum and lithium. The opaque materials confine light within diode 12 causing diode 12 to emit light along the edges. Polymer 16 typically is poly(phenylene vinylene) or other such polymer that forms a band gap structure with the material used for conductor 14 so that in the presence of an electrical bias, electrons and holes from conductor 14 and layer 17 are injected into polymer 16 where they recombine radiatively and emit light.

Detector 13 is formed similar to diode 12 so that conductor 18, polymer 19 and contact layer 21 are substantially the same as conductor 14, polymer 16, and contact layer 17, respectively. Optical waveguide element 15 has a first end optically coupled to diode 12 and a second end optically coupled to detector 13. Element 15 includes a polymer waveguide 22 that is formed on substrate 11 and an evanescent mode sensing layer 23 covering waveguide 22. Waveguide 22 is optically coupled to diodes 12 and 13 so that light emitted by diode 12 travels through waveguide 22 and is received by detector 13. The material used for waveguide 22 can be the same polymer used for polymers 16 and 19, or it could be a different polymer material such as polyimide, as long as the material is suitable for supporting the optical mode required to transport light emitted by diode 12.

A portion of the light traveling through waveguide 22 extends into sensing layer 23. This is typically referred to an evanescent field. Evanescent fields are well known to those skilled in the art. When layer 23 is exposed to certain analytes, the chemical absorption or index of refraction of sensing layer 23 is changed thereby changing the optical mode in waveguide 22 and altering or transforming the light coupled to diode 13 by waveguide 22. The effect on the light passing through waveguide 22 depends on the material used in sensing layer 23. Some materials increase the waveguide loss thereby decreasing the amount of light sensed by diode 13 while other materials such as fluorescent dyes emit light at a different wavelength which can be sensed by detector 13.

In an alternate embodiment, element 15 could be a polymer that contains an indicator such as an absorption or fluorescent indicator. In this alternate embodiment, sensing layer 23 would not be utilized. Some typical indicators, the mode of operation, and the element being sensed are listed in the table below:

| Indicator | Mode | Sensing |
|---|---|---|
| fluorescein | Fluorescence | oxygen,humidity,pH |
| bromocresol green | Absorption | pH |
| bromocresol purple | Absorption | ammonia,pH |
| Ru(bpy)²⁺ | Fluorescence | oxygen |
| Ru(ph₂phen)₃²⁺ | Fluorescence | oxygen |
| cobalt chloride | Absorption | humidity |
| porphyrin | Absorption | heavy metals, ammonia,pH. |

Integrating the optical emitter and optical detector on a common substrate with the optical waveguide element ensures maximum coupling between the optical waveguide element and the emitter and detector. Utilizing polymer light-emitting diodes and polymer waveguides results in a low cost sensor that is easy to manufacture.

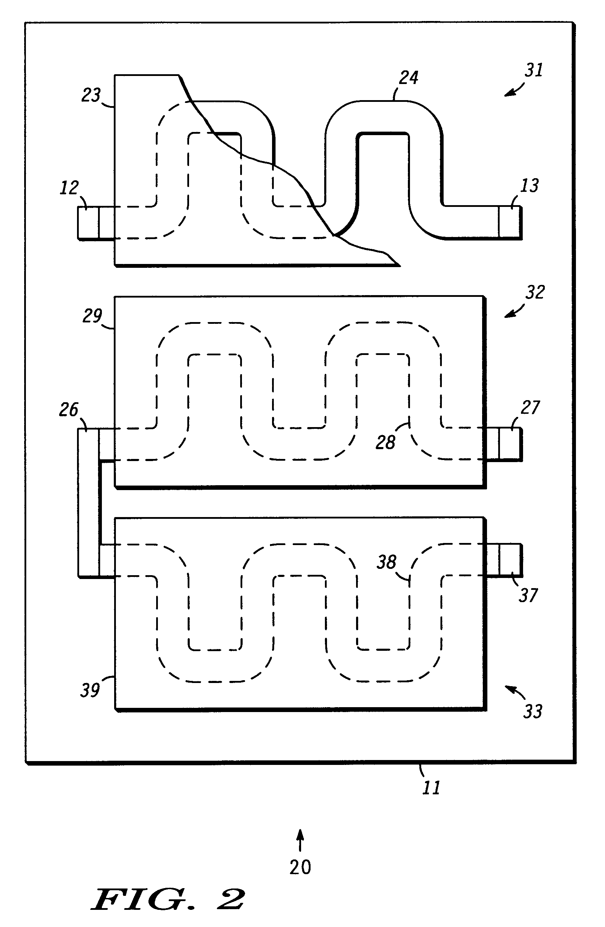

FIG. 2 illustrates a plan view of a multi-channel optical sensor 20 that has a plurality of optical sensing channels. Elements of FIG. 2 that have the same reference numerals as FIG. 1 are the same as the corresponding elements of FIG. 1. Sensor 20 has a first channel 31, a second channel 32, and a third channel 33 that are formed on substrate 11. Channel 31 functions similar to sensor 10 shown in FIG. 1 and includes diode 12, detector 13, and sensing layer 23. Channel 31 also includes a polymer waveguide 24 that optically couples the light emitted by diode 12 to detector 13. Waveguide 24 functions similarly to waveguide 22 (FIG. 1) but has a serpentine pattern in order to provide a long distance for the light to travel while minimizing space.

Channel 32 includes waveguide 28 that optically couples a polymer light emitting diode 26 to a polymer photodetector or detector 27. Diode 26 is formed large enough to function as a common optical emitter for both channels 32 and 33. Consequently, diode 26 injects light into waveguide 28 and into a waveguide 38 for channel 33. Except for the size of diode 26, diode 26 is formed and functions similar to diode 12. Detector 27 is formed and functions similar to detector 13, while waveguide 28 is similar to waveguide 24 and is covered with an evanescent mode sensing layer 29 that is similar to sensing layer 23.

Channel 33 includes a polymer waveguide 38 that optically couples diode 26 to a polymer photodetector or detector 37. Detector 37 is formed and functions similar to detector 13. Polymer waveguide 38 is similar to waveguide 24 but is covered with an inert protective layer 39 instead of an evanescent mode sensing layer. Consequently, channel 33 can serve as a reference channel for establishing the sensitivity of sensor 20. The output of channel 33 can be compared to the output of channel 32 to set a reference level for channel 32. In such a case, sensor 20 could be suitable for indicating both the presence and the quantity of a particular analyte. Alternately the output of detector 37 can be used to form a differential signal with the output of detectors 13 or 27 to form a differential signal to be processed by other electronics (not shown).

In an alternate embodiment, sensor 10 (FIG. 1) or sensor 20 could be formed on a silicon substrate so that electronics used to process the output of detector 13 or detectors 13, 27, and 37 could be built on the same substrate thereby providing an integrated sensor and electronics to further reduce the cost of sensors 10 and 20.

By now it should be appreciated that there has been provided a novel optical sensor. Using polymer diodes and polymer waveguides facilitates integrating the diodes and optical waveguide elements on a common substrate thereby increasing optical coupling and operating efficiency. Additionally, polymer waveguides, detectors, and diodes can be formed with semiconductor manufacturing techniques thereby reducing the cost and size of the sensors.

## Claims

1. An evanescent mode optical sensor comprising:
a substrate (11) having a surface;
a first optical emitter (26) on the surface of the substrate; and
a first optical waveguide element (28) on the surface of the substrate wherein a first end of the first optical waveguide element is optically coupled to the first optical emitter (26).

2. The sensor of claim 1 further including a first optical detector (27) on the surface of the substrate and optically coupled to a second end of the first optical waveguide element (28).

3. The sensor of claim 1 wherein the first optical waveguide element includes a first polymer waveguide, and the first optical emitter includes a polymer light emitting diode.

4. The sensor of claim 3 further including an evanescent mode sensing layer (29) covering the first polymer waveguide.

5. The sensor of claim 2 further including a second optical waveguide element (38) on the surface of the substrate wherein a first end of the second optical waveguide element is optically coupled to the first optical emitter (26); and a second optical detector (37) on the surface of the substrate, the second optical detector optically coupled to a second end of the second optical waveguide element.

6. The sensor of claim 5 wherein the second optical waveguide element includes a polymer waveguide (38) on the substrate, a first end of the polymer waveguide optically coupled to a first polymer light emitting diode (26) and a second end of the polymer waveguide optically coupled to a polymer photodetector; and an evanescent mode sensing layer covering the polymer waveguide.

7. The sensor of claim 4 wherein the second optical waveguide element includes a polymer waveguide (38) on the substrate, a first end of the polymer waveguide optically coupled to a first polymer light emitting diode (26) and a second end of the polymer waveguide optically coupled to a polymer photodetector (37); and an inert protective layer (39) covering the polymer waveguide.

8. The sensor of claims 1 and 2 further including a second optical waveguide element (24) on the surface of the substrate.

9. The sensor of claim 8 further including a second optical emitter (12) and a second optical detector (13) on the substrate wherein a first end of the second optical waveguide element is optically coupled to the second optical emitter (12); and a second end of the second optical waveguide element is optically coupled to the second optical detector (13).

10. A method of sensing an analyte comprising:
exposing the analyte to a polymer waveguide (22) that is on a substrate (11) and optically coupled to both an optical emitter (12) and an optical detector (13) wherein the optical emitter and the optical detector are on the substrate.
